# EUROPEAN PATENT SPECIFICATION

(11) **EP 1 164 673 B1**
(45) Date of publication and mention of the grant of the patent: **22.03.2006**
(21) Application number: 01122185.0
(22) Date of filing: 13.01.1999
(51) Int. Cl.: H02G 1/12

(54) **Wire stripper**
Drahtentmantelungsgerät
Dispositif de dénudage de fils

(30) Priority: 16.01.1998 JP 693198
(43) Date of publication of application: 19.12.2001
(62) Divisional of application: 99100529.9
(73) Proprietor: Komax Holding AG, 6036 Dierikon (CH)
(72) Inventor: Kousuke, Hombu, Hachioji-shi, Tokyo (JP)
(74) Representative: Blöchle, Hans

(56) References cited:
- EP-A- 0 352 038
- US-A- 4 745 828

## Description

### [Technical field to which the invention belongs]

This invention concerns a wire stripper with a cutter for nipping and cutting the coating of a wire at its end, comprising a centering device ensuring the centering of the wire during the nipping and cutting process and first and second cutting elements.

### [Conventional technique]

Various wire strippers have been made available which serve for stripping the coating of a coated wire at the end and exposing the core in a required length.

In case of such conventional wire strippers, in general, a coated wire is inserted into machine and gripped at the end by grippers from both sides, and is nipped at the same time by cutters from both sides where its coating is to be cut. Cutters cut the coating only and strip the coating away from the wire end while being withdrawn.

US 4 745 828 discloses a device for striping electrical cables. The cable is fixed in position by clamping jaws, whereas its insulation can be severed by rotating blades. Disposed next to each blade is a centering jaw, which centers the cable. The blades and the centering jaws are positioned axially and the desired cutting depth is adjusted by spindles, each of which is operated by a motor. Cutters and grippers of such conventional wire strippers are opened and closed through reciprocating motion of cutter/gripper operating elements by means of a pneumatic cylinder (or hydraulic cylinder) or through operation of cutter/gripper operating cams by means of an electric motor.

### [Problems to be solved by the invention]

To mention some of the problems concerning conventional wire strippers, said pneumatic or hydraulic cylinder necessitates compressor or hydraulic unit respectively in addition to wire stripper to remarkably restrict the place where such wire stripper can be used in combination with such equipment. Furthermore, compressor causes high exhaustion noise and may affect adversely the mechanism due to moisture contained in the air.

The latter variation by cam solution requires large decelerator and large components incl. coupling because an electric motor has to be used separately for each motion or motor rotation has to be transmitted to the cam only after substantial deceleration to result in large and expensive wire strippers.

### [Effects of the invention]

The present invention has the object of provding a remarkably small, quiet and inexpensive wire stripper without restrictions about location of use because gripping of wire and stripping of coating can be performed by means of a usual reversible motor, wherein a main spindle is supported on machine frame, being allowed to slide longitudinally, is reversible in rotation by means of only one motor and is provided with a lead-screwed shaft coupled with a nut block, the lead-screwed shaft moves forward to the nut block by forward rotation of the said main spindle to close the grippers and the cutters and at the same time to rotate the cutters, the nut block moves backward to retract the cutters after the main spindle has stopped to advance.

### [Means for solving the problems]

The invention aims at providing an inexpensive compact wire stripper capable of automatically grasping a coated wire, cutting the coating by cutters, rotating the cutters and stripping the cut coating away by means of only one electric motor. The invention solves the said problems as follows: A wire stripper is provided with a reversible main spindle which is supported on machine frame and allowed to slide crosswise so as to enable gripping operation of the grippers as well as nipping and cutting operation of the cutters and that the main spindle is provided with lead-screwed shaft with which a nut block is coupled in such manner that the lead-screwed shaft advances by forward rotation of the main spindle to close the grippers and the cutters as well as to rotate the cutters, the nut block is then moved backward by the lead screw of the lead-screwed shaft after the main spindle has stopped to advance and the cutters are then withdrawn to strip the cut coating away from the core. The invention is defined by the features of the independent claim 1. Preferred embodiments are defined in the dependent claims.

### [Brief explanation on drawings]

- Fig. 1:: Perspective view of a working form of wire stripper according to the invention
- Fig. 2:: Longitudinal section
- Fig. 3:: Horizontal section

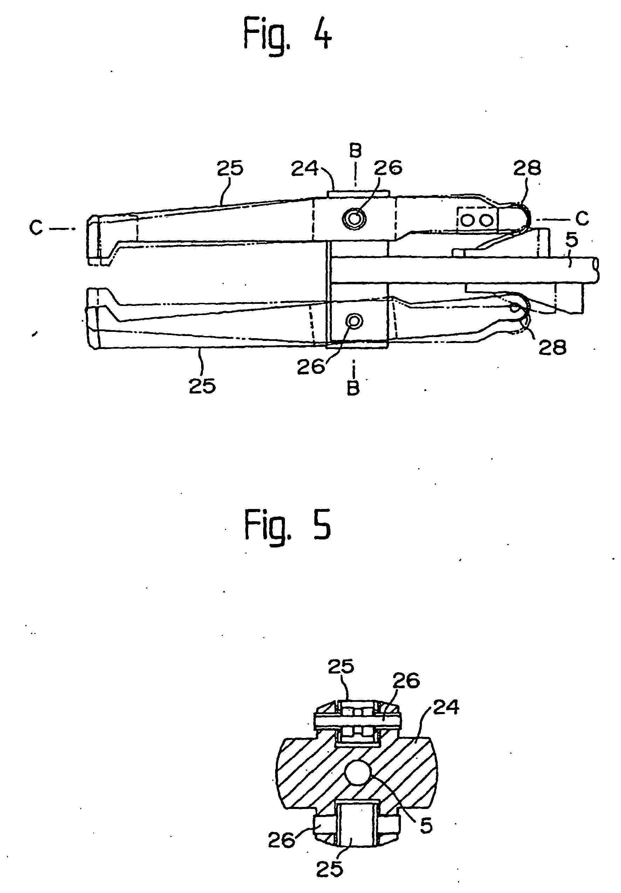

- Fig. 4:: Explanatory sketch of cutter arm operation
- Fig. 5:: Section B-B according to Fig. 3
- Fig. 6:: Section of cutter according to Fig. 4
- Fig. 7:: Explanatory sketches (A), (B) on cutter function
- Fig. 8:: Disassembly sketches (A) to (C) for cutter structure
- Fig. 9:: Top view for concrete working form of cutter
- Fig. 10:: Cutter front view
- Fig. 11:: Cutter holder with pusher plate

### [A working form of the invention]

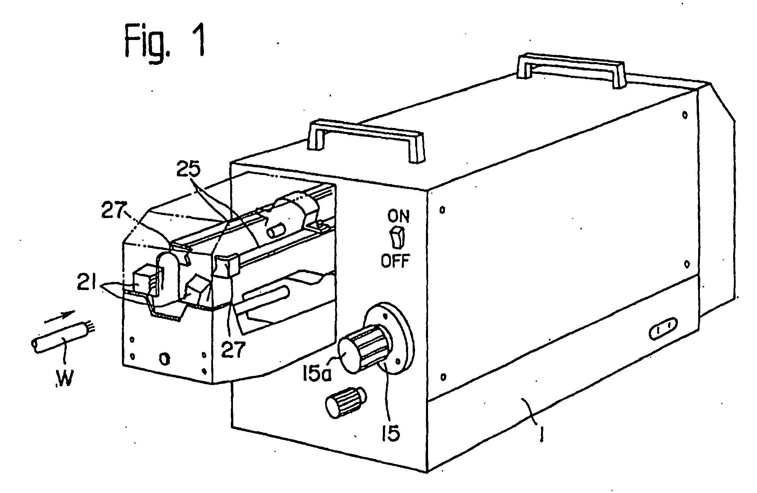

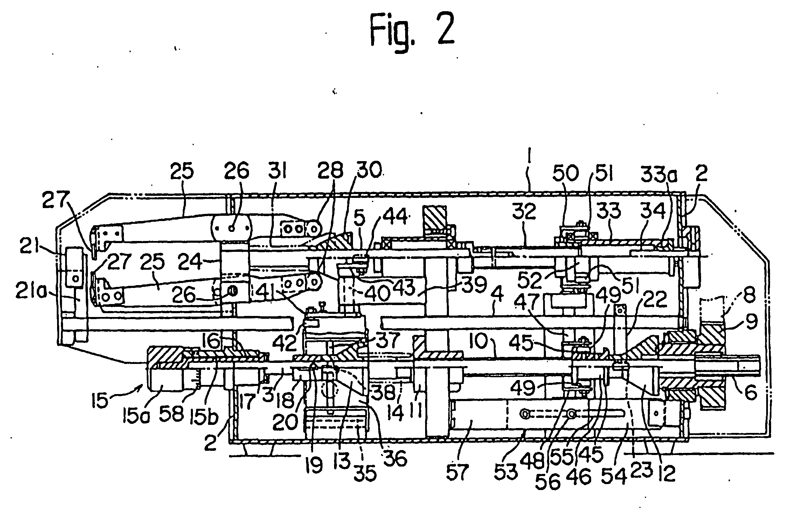

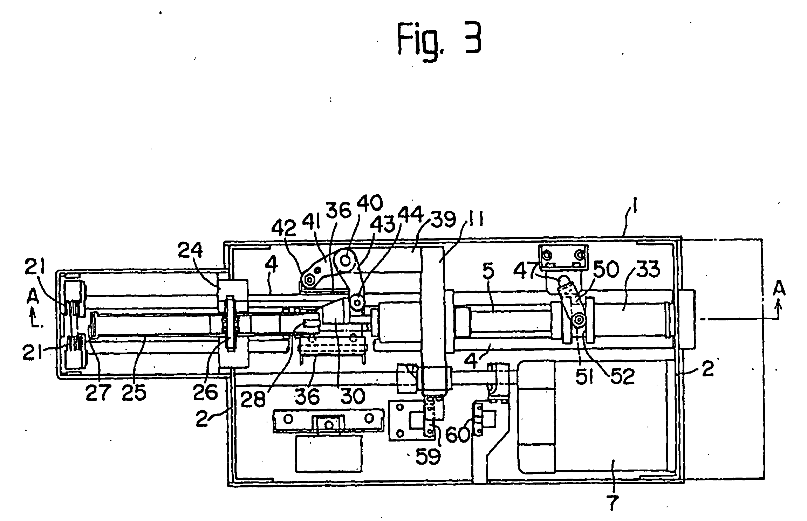

The invention is described in the following referring to a working form as indicated in the attached drawings. Fig. 1 shows the appearance of a working form of a wire stripper according to the invention. Fig. 2 shows its longitudinal section (corresponding to section A-A of Fig. 3) and Fig. 3 shows its horizontal section. In the description below, the left side in Figs. 1 through 3 where wire comes in is referred to as "front side" and the right side as "rear side".

As shown in Fig. 2, main spindle 3 is supported in lower position between side walls 2 at the front end and the rear end in longitudinal direction of machine frame 1 in such manner that it can rotate and at the same time slide axially. Right over main spindle 3, two gripper shafts 4, 4, are provided parallel to each other and cutter shaft 5 is located over the middle position of shafts 4, 4.

The rear end of said main spindle 3 is formed as spline shaft 6 (or key) within a required length. Toothed pulley 9 is fitted on this spline shaft 6 to receive rotation via timing belt 8 from usual reversible motor 7 (Fig. 3) such as induction motor (single phase), cooled reversible motor, etc. mounted on machine frame 1 so as to transmit rotation of motor 7 to main spindle 3.

The intermediate portion of said main spindle 3 is formed as lead-screwed shaft 10, on which nut block 11 is fitted to move forward or backward axially in accordance with the rotating direction of main spindle 3.

First cam 12 tapering off to front side is fixed co-axially to said main spindle 3 between spline shaft 6 and lead-screwed shaft 10, while second cam 13 tapering off to front side is fitted in front of said nut block 11 and allowed to slide. Compression spring 14 in the form of comprising coil is inserted between the thicker end of second conical cam 12 and said nut block 11. Said lead-screwed shaft 10 and nut block 11 may be of ball screw specification.

At the front end of said main spindle 3 protruding from side wall 2 of machine frame 1, positioning element 16 is fitted to move forward and backward by screw through rotation of knob 15a of infeed adjusting mechanism 15 for adjust ment of infeed to the coating of wire W. Thrust bearing 17 is provided on the inner end of positioning element 16 to bring it into contact with the front end of said second conical cam 13.

Cylindrical part 18 on the tip of said second conical cam 13 is provided with an axial slot 19, into which pin 20 fixed to said main spindle 3 is fitted, so that advance of main spindle 3 is allowed by the length of said slot 19 after the front end of second conical cam 13 has come in contact with thrust bearing 17 at the inner end of said positioning element 16.

Base 21a of grippers 21, 21 is fixed to the front end of said gripper shafts 4, 4 respectively, while the upper end of arms 22, 22 are fixed and suspended near the rear end of gripper shafts 4, 4 respectively. Cam rollers 23, 23 are attached to the lower end of arms 22, 22 in such manner that they can rotate on horizontal plane. Cam rollers 23, 23 are kept in contact with the peripheral face of said first conical cam 12 and pushed by its conical periphery when it moves forward to rotate gripper shafts 4, 4 in opposite direction to each other. Said grippers 21, 21 close (wire gripped) thus when first conical cam 12 moves forward, while they are opened in case of backward movement.

The front end of said cutter shaft 5 is located on side wall 2 at the front end of machine frame 1. Holder 24 fixed to the front end of cutter shaft 5 bears cutter arms 25, 25 symmetrically about the axis of said cutter arm 5 by means of shafts 26, 26 located a little behind their middle points. Cutter arms 25, 25 are provided with cutters 27, 27 facing each other at the front end and with cam rollers 28, 28 at the rear end.

Third conical cam 30 is sliding-fitted to said cutter shaft 5. Compression spring 31 is inserted between cam 30 and said holder 24.

Spline shaft 32 (or key) is fitted on the front side of said cutter shaft 5, to which sliding cylinder 33 is sliding-fitted. Female-screwed part 33a at the rear end of sliding cylinder 33 is connected to lead-screwed part 34 fixed to side wall 2.

Said second conical cam 13 is provided with oscillating members 36, 36 (only one of them shown in Fig 2) on both sides which are supported on machine frame 1 in erected position by spring on the lower end so that they can oscillate by shafts 35, 35. Cam roller 38 on vertical shaft 37 of oscillating member 36 is designed to come in contact with the peripheral face of second conical cam 13.

On the other hand, shaft 40 vertical to supporting member 39 substantially integrated to said nut block 11 is supported in such manner that it can rotate freely. Roller 42 on the tip of lever 41 whose base end is fixed to the lower end of shaft 40 is in contact with the outer face of said oscillating member 36 at a point near the upper end, while roller 44 on the tip of lever 43 whose base end is fixed to the upper end of said shaft 40 is in contact with the rear end of said third conical cam 30. Roller 42 of said lever 41 is kept always in contact with oscillating member 36 by the action of said compression spring 31. When second conical cam 13 moves forward, oscillating member 36 is pushed outward so that roller 44 of said lever 43 moves third conical cam 30 forward against the action of compression spring 31.

Cylindrical member 46 having flanges 45, 45 on its front and rear ends is provided at the front end of said first conical cam 12. Rollers 49, 49 on the tip of lower lever 48, which is reverse-C-shaped if seen from lateral side and fixed to shaft 47 supported on machine frame 1 and allowed to rotate, are put between flanges 45, 45 of said cylindrical member 46 with axial play required. Rollers 51, 51 on the tip of upper lever 50, which is reverse-C-shaped if seen from lateral side and fixed to the upper part of said shaft 47, are fitted into peripheral groove formed on said sliding cylinder 33 in peripheral direction. When rollers 49, 49 of said lower lever 48 are pushed by rear flange 45 of said cylindrical member 46, upper lever 50 oscillates to move sliding cylinder 33 forward via its rollers 51, 51 which in turn is connected with said lead-screwed part 34 to transmit rotation to cutter shaft 5 through spline shaft 32 to complete an interlocking mechanism.

Brake unit 53 is provided between said nut block 11 and rear side wall 2 of machine frame 1 to decelerate return (backward movement) of nut block 11. Brake unit 53 is coupled with plate 57 on nut block side by means of shaft 56 inserted into horizontal slot 55 of base 54 fixed to said side wall 2 and exerts braking action by friction due to the force of a spring, not shown in the figure, via shaft 56. Resistance to return of nut block 11 is converted into gripping force of said grippers 21, 21 which grip wire strongly.

The timing of movement of said first and second conical cams is so designed that main spindle 3 advances by lead screw on its lead-screwed shaft 10 while nut block is kept fixed during forward rotation of main spindle 3, first conical cam 12 closes cutters 27, 27, second conical cam 13 moves forward to close grippers 21, 21, nut block 11 moves backward against the resistance of brake unit 53 by reaction force caused when second conical cam 13 stops, this resistance is converted into a force to close grippers 21, 21 strongly and then cutters 27, 27 move backward as a result of retraction of nut block 11 to strip the coating away from core.

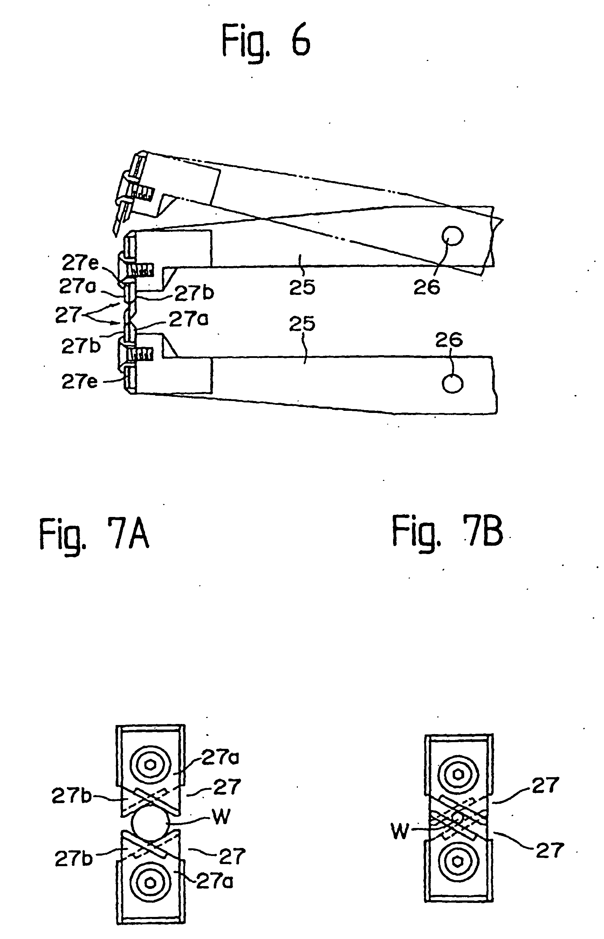

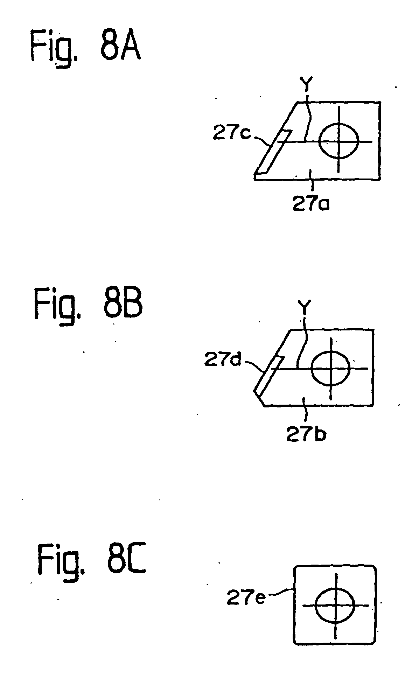

Said cutters 27, 27 comprise two cutting edges (first cutting element 27a, second cutting element 27b) respectively as shown in Fig. 7 (A), (B) and Fig. 8 (A), (B). Cutting edge 27c of first cutting element 27a of the one cutter arm 25 and cutting edge 27c of first cutting element 27a of the other cutter arm 25 have the same inclination so that they become parallel to each other in butt position. Cutting edges 27d, 27d of second cutting elements 27b, 27b to be lapped over first cutting elements 27a, 27a have the same inclination as that of cutting edges 27c, 27c of said first cutting elements 27a, 27a, but inreverse direction, so that cutting edges 27c, 27d of first and second cutting elements 27a, 27b present an obtuse V shape if seen from front side. First and second cutting elements 27a, 27b are thus fed in to cut coating when closed in lapped position, according to wire outer diameter as shown in Fig. 7 (A), (B).

Cutting elements 27a, 27b of said cutters 27, 27 are mounted to cutter arm 25 with spacer 27e (approx. 0.2 to 0.3 mm thick) inserted between them so as to prevent collision of cutter edges 27c, 27d with each other when they pass each other. As a result of this, V-forming cutting edges are apart from others so that interference of cutting edges with each other is prevented when the cutting edges of upper and lower cutters 27, 27 are fed in to engage while tracing a circular arc.

Knob 15a of said infeed adjusting mechanism 15 is provided on ist peripheral face with graduations 58 in 5/100 mm. By turning knob 15a, positioning member 16 fitted on the peripheral screw of its shaft 15b moves forward or backward to adjust the position of its inner end (thrust bearing 17) .

59 in Fig. 3 is a sensor for setting starting position operated by nut block 11 and 60 shows a sensor for detecting completed stripping and giving reversing command to motor 7.

The effects of the said working form are described in the following. Knob 15a of infeed adjusting mechanism 15 is turned first in order to set infeed in accordance with the diameter of wire to be handled referring to graduations 58. Then, the coated wire W is put between grippers 21, 21 and held in position where the required stripping length of coating is ensured. Switch, not indicated in the figure, is turned on to start motor 7. Motor 7 operates in forward direction and main spindle 3 rotates in forward direction.

At the beginning of forward rotation of main spindle 3, nut block 11 is kept fixed by resistance of brake unit 53 so that main spindle 3 advances because of coupling between its lead-screwed shaft 10 and nut block 11.

First conical cam 12 pushes then rollers 23, 23 outward to oscillate arms 22, 22. Gripper shafts 4, 4 fixed to them rotate respectively to close grippers 21, 21 on their tip to grip.the coated wire.

At the same time, second conical cam 13 pushes rollers 38, 38 to oscillate oscillating members 36, 36 outward by using shafts 35, 35 as supporting point. Oscillation of oscillating members 36, 36 is transmitted via roller 42, lever 41, shaft 40, lever 43 and roller 44 to push forward third conical cam 30.

Forward movement of third conical cam 30 pushes outward rollers.28, 28 of cutter arms 25, 25 which turn around shafts 26, 26 respectively to close cutters 27, 27 on the tip to cut the coating of coated wire W up to a specified depth.

At this moment, rear flange 45 of cylindrical member 46 on the tip of first conical cam comes in contact with rollers 49, 49 of lower lever 48 and pushes them so that lower lever 48 turns around shaft 47. This turning movement is transmitted via shaft 47 to upper lever 50 whose rollers 51, 51 move forward sliding cylinder 33.

Because lead-screwed part 34 on machine frame side is coupled with female-screwed part 33a, sliding cylinder 33 rotates during its forward movement. Cutter shaft 5 connected to sliding cylinder 33 by spline shaft 32 rotates so that cutters 27, 27 turn while being fed in to the coated wire W to cut the coating uniformly over the entire periphery.

Pin 20 of main spindle 3 advances further by the length of slot 19 of cylindrical part 18 after cylindrical part 18 on the tip of second conical cam 13 has come in contact with the inner end of positioning member 16 and second conical cam 13 has stopped. Forward movement corresponding to this stroke of pin 20 serves as rotation stroke for said sliding cylinder 33.

When said pin 20 has come in contact with the front end of slot 19, main spindle is not able any longer to advance. Then, nut block 11 begins to move backward by lead screw on rotating main spindle 3 to retract cutter shaft 5 together with the coating having been cut by cutters 27, 27. Third conical cam 30 does not move backward at this moment because it is blocked at the rear end by rollers 44, 44 of levers 43, 43 so that cutters 27, 27 are held in nipping position and move backward to strip the cut coating away from the core.

When said nut block 11 has been detected by sensor 60 for giving reversing command, motor operates in reverse direction to reverse main spindle 3, which then returns first by lead screw on its lead-screwed shaft 10. As a result of this, grippers 21, 21 having been kept in closed position are opened by procedure reverse to the above to release the coated wire W. As second conical cam 13 moves backward, oscillating members 36, 36 return to vertical position and rollers 44, 44 of levers 43, 43 return as well. Then, lower cutter arm 25 lowers while oscillating on the cutter side and thus cutters 27, 27 come apart from each other. Nut block 11 moves forward to the initial position (as shown in Figs. 2 and 3) by the action of lead-screwed shaft 10. Sensor 59 detects this and stops motor 7 to complete the process.

Non-reversible motor may also be used instead of reversible motor if main spindle rotation can be changed by means of a clutch. Notwithstanding the working form as described above where cutter shaft 5 is rotated by lead screw 34 through interlocking mechanism in combination with the movement of first conical cam 12, a motor may also be provided separately for rotating cutter shaft 5 and be set to operate at a specified moment to rotate cutter shaft 5. More preferably than the working form as described above where two cutting elements (first cutting element 27a, second cutting element 27b) lap over each other and are fixed on said cutters 27, 27 so that their cutting edges present a V shape if seen from front side, one of both cutting elements 27a and 27b should be enabled to move forward and backward in wire nipping direction and the cutting edge of such movable cutting element should be flattened so as to ensure more positive centering by movement of the cutting element at wire nipping operation in accordance with wire diameter and infeed.

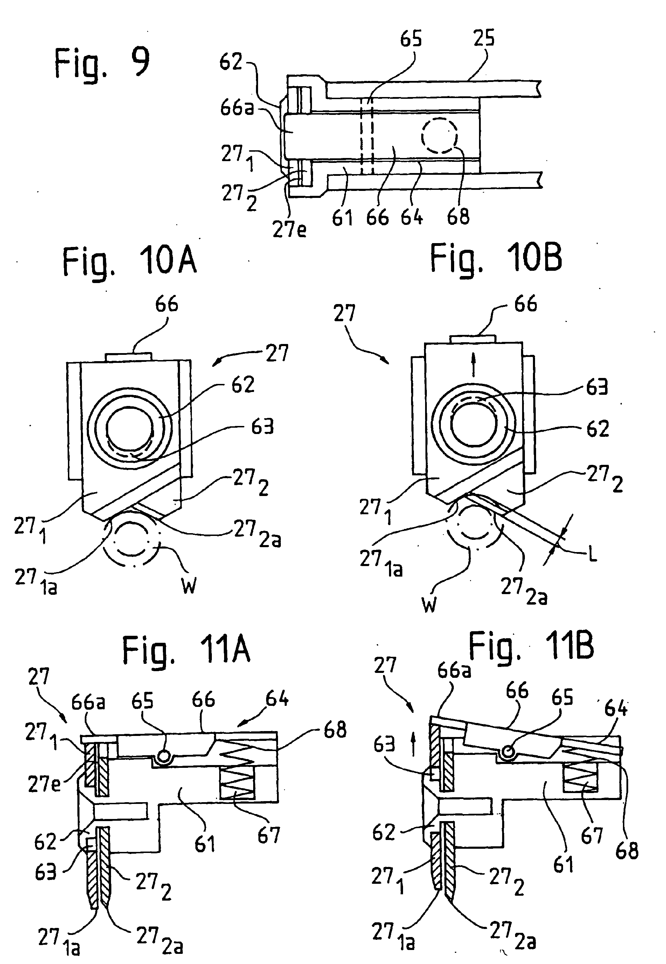

A concrete working form for this is shown in Figs. 9 through 11 by taking one of cutters 27 as a representative example. First and second cutting elements 27-2, 27-1 are attached, with spacer 27e between them, to the front end of cutter holder 61 on the tip of cutter arm 25 by means of lap screw 62. The cutting element on outer side of the both, namely second cutting element 27-1, is made movable in wire nipping direction through its mounting hole 63 formed as a slot extending in wire nipping direction, and provided with flattened cutting edge 27-1a. Said cutter holder 61 is provided on its back side with pushing element 64 which pushes said second cutting element 27-1 at the end opposite to cutting edge 27- 1a. In case of the illustrated example, pusher plate 66 supported at ist intermediate portion by shaft 65 as shown in Fig. 11 (A), (B) is provided on said cutter holder 61, front end 66a of pusher plate 66 is in contact with the outer end of said second cutting element 27-1, the tip of compression spring 68, approximately the half of which is fitted in supporting hole 67 formed in cutter holder 61, is in contact with the opposite end of pusher plate 66 and compression spring 68 pushes always the rear end of pusher plate 66 so that front end 66a of pusher plate 66 pushes second cutting element 27-1 into the direction of advance of cutting edge 27-1a. Means giving said pushing force is not limited to said compression spring 68, but may be any other means that pushes second cutting element 27-1 into direction of advance of cutting edge such as wire spring, leaf spring, etc. With said cutter structure, infeed is determined by cutting edge 27-2a of fixed first cutting element 27-2 at the moment when cutting elements 27-1, 27-2 of both cutters nip wire W while cutting edge 27-1a of movable second cutting element 27-1 comes in contact with the outer face of wire W as shown in Fig. 10 (A) and then retracts in accordance with infeed L as shown in Fig. 10 (B) against the force given by compression spring 68. Thus, wire W regardless of its diameter is brought always to the center between the cutting edges of cutting elements 27-1, 27-2 by both cutters 27, 27 so that the coating can be cut to a uniform depth over the entire periphery of wire W by turning cutters on the basis of ensured centering of wire W. Notwithstanding the said working form where outer second cutting element 27-1 is made movable, it is naturally possible to make inner first cutting element 27-2 movable and to fix outer second cutting element 27-1.

## Claims

1. Cutter for nipping and cutting the coating of a wire at its end, comprising a centering device ensuring the centering of the wire during the nipping and cutting process and first and second cutting elements,
**characterized in,**
**that** first and second cutting elements (27-2,27-1) lap over each other so that their cutting edges (27-2a,27-1a) present a V shape if seen from front side, whereby the second cutting element (27-1) is designed to fulfill a relative movement to the first cutting element (27-2) into wire nipping direction, whereby the wire (W) is brought to the center between the cutting edges (27-2a,27-1a) of the cutting elements (27-2,27-1) while cutting edge (27-1a) of second cutting element (27-1) comes into contact with the outer face of wire (W) and then retracts in accordance with infeed (L) of cutting edge (27-2a) of first cutting element (27-2) .

2. Cutter as defined in claim 1,
**characterized in,**
**that** the cutting edge (27-2a) of the first cutting element (27-2) presents the one arm of the V and the flattened cutting edge (27-1a) of the second cutting element (27-1) presents the other arm of the V, whereby the elements are moved in a wire nipping direction and turned over the entire coating periphery during the nipping and cutting process.

3. Cutter as defined in claim 1 or 2,
**characterized in,**
**that** the cutting elements (27-1,27-2) are attached to the front end of a cutter holder (61), whereby the second cutting element (27-1) is made movable in wire nipping direction through a mounting hole (63).

4. Cutter as defined in any one of the preceding claims,
**characterized in,**
**that** the second cutting element (27-1) is arranged at a front end (66a) of a spring loaded pusher plate (64,66), which is pivotably mounted on the cutter holder (61).

## Revendications

1. Lame pour pincer et couper la gaine d'un fil, à son extrémité, comprenant un dispositif de centrage qui garantit le centrage du fil pendant l'opération de pincement et de coupe, et des premier et second éléments de coupe,
**caractérisée en ce que** les premier et second éléments de coupe (27-2, 27-1) se recouvrent de telle sorte que leurs arêtes de coupe (27-2a, 27-1a) présentent une forme en V, vues de face, étant précisé que le second élément de coupe (27-1) est conçu pour décrire un mouvement relatif par rapport au premier élément de coupe (27-2) dans le sens de pincement du fil, et que le fil (W) est amené au centre entre les arêtes de coupe (27-2a, 27-1a) des éléments de coupe (27-2, 27-1) tandis que l'arête de coupe (27-1a) du second élément de coupe (27-1) vient en contact avec la face extérieure du fil (W) puis se rétracte suivant l'avance (L) de l'arête de coupe (27-2a) du premier élément de coupe (27-2).

2. Lame selon la revendication 1, **caractérisée en ce que** l'arête de coupe (27-2a) du premier élément de coupe (27-2) présente le premier bras du V et l'arête de coupe aplatie (27-1a) du second élément de coupe (27-1) présente l'autre bras du V, les éléments étant déplacés dans un sens de pincement du fil et tournés sur toute la périphérie de la gaine pendant l'opération de pincement et de coupe.

3. Lame selon la revendication 1 ou 2, **caractérisée en ce que** les éléments de coupe (27-1, 27-2) sont fixés à l'extrémité avant d'un porte-lame (61), le second élément de coupe (27-1) étant rendu mobile dans le sens de pincement du fil grâce à un trou de montage (63).

4. Lame selon l'une quelconque des revendications précédentes, **caractérisée en ce que** le second élément de coupe (27-1) est disposé sur une extrémité avant (66a) d'une plaque de poussée à ressort (64, 66) qui est montée pivotante sur le porte-lame (61).

## Patentansprüche

1. Schneidvorrichtung zum Einklemmen und Abschneiden der Ummantelung eines Drahts an seinem Ende, die eine Zentriervorrichtung, die das Zentrieren des Drahts während des Einklemm- und Schneidvorgangs gewährleistet, und ein erstes und zweites Schneidelement umfasst,
**dadurch gekennzeichnet, dass**
sich das erste und zweite Schneidelement (27-2, 27-1) so überlappen, dass ihre Schneidkanten (27-2a, 27-1a) bei Betrachtung von vorne eine V-Form darstellen, wobei das zweite Schneidelement (27-1) dazu ausgeführt ist, eine Relativbewegung zum ersten Schneidelement (27-2) in Drahteinklemmrichtung auszuführen, und der Draht (W) in die Mitte zwischen den Schneidkanten (27-2a, 27-1a) der Schneidelemente (27-2, 27-1) gebracht wird, während die Schneidkante (27-1a) des zweiten Schneidelements (27-1) mit der Außenfläche des Drahts (W) in Kontakt kommt und dann gemäß der Zuführung (L) der Schneidkante (27-2a) des ersten Schneidelements (27-2) zurückgezogen wird.

2. Schneidvorrichtung nach Anspruch 1,
**dadurch gekennzeichnet, dass**
die Schneidkante (27-2a) des ersten Schneidelements (27-2) den einen Arm des V und die abgeflachte Schneidkante (27-1a) des zweiten Schneidelements (27-1) den anderen Arm des V darstellt, wobei die Elemente während des Einklemm- und Schneidvorgangs in einer Drahteinklemmrichtung bewegt und um den gesamten Ummantelungsumfang gedreht werden.

3. Schneidvorrichtung nach Anspruch 1 oder 2,
**dadurch gekennzeichnet, dass**
die Schneidelemente (27-1, 27-2) am vorderen Ende eines Schneidvorrichtungshalters (61) befestigt sind, wobei sich das zweite Schneidelement (27-1) aufgrund eines Montagelochs (63) in einer Drahteinklemmrichtung bewegen kann.

4. Schneidvorrichtung nach einem der vorhergehenden Ansprüche,
**dadurch gekennzeichnet, dass**
das zweite Schneidelement (27-1) an einem vorderen Ende (66a) einer federbelasteten Schiebeplatte (64, 66) angeordnet ist, die schwenkbar am Schneidvorrichtungshalter (61) angebracht ist.
